# EUROPEAN PATENT APPLICATION

(11) **EP 4 067 955 A1**
(43) Date of publication of application: **05.10.2022**
(21) Application number: 21180134.5
(22) Date of filing: 17.06.2021
(51) Int. Cl.: G02B 6/44

(54) **DISTRIBUTION RACK**

(30) Priority: 31.03.2021 JP 2021059191
(71) Applicant: Corning Research & Development Corporation, Corning, New York 14831 (US)
(72) Inventor: YAMAUCHI, Takaya, Corning, 14831 (US); SATO, Hiroyuki, Corning, 14831 (US)
(74) Representative: Reeve, Nicholas Edward

(57) **Abstract**

A termination section has a plurality of cassettes 320 each internally formed with a core wire housing space capable of housing a ribbon fiber 120 and movable in a given range in a front-rear direction, wherein each of the cassettes 320 has a pair of laterally opposed sidewalls, one sidewall 362A of which is formed with an opening capable of introducing the ribbon fiber 120 into the core wire housing space therethrough, wherein each of the cassettes 320 comprises an adapter 322 configured to allow the end of the introduced ribbon fiber 120 to be connected thereto, and allow the end of a jumper cable 150 to be connected thereto. Further, a guide portion 380 is formed at the opening, wherein the guide portion 380 has a pair of front and rear guide walls 384A forming therebetween a guide space expanding in the front-rear direction toward a lateral direction, wherein each of the front and rear guide walls 384A is formed in a curved shape which is convex toward the guide space in plan view.

## Description

### TECHNICAL FIELD

The present invention relates to a distribution rack.

### BACKGROUND ART

In a data center in which a plurality of servers are arranged, a distribution rack is used to distribute a plurality of optical fiber cables extending from the outside such as a telecom company, to the servers. The distribution rack is internally provided with a fiber connection section for connecting a telecom company-side optical fiber cable to a server-side optical fiber cable.

As a configuration of such a fiber connection section, a cassette-type fiber connection section is widely used which is capable being housed in a rack, as described in, e.g., the below-mentioned Patent Documents 1 and 2. Specifically, after providing a cassette movable back and forth in a front-rear direction with respect to a rack, a telecom company-side optical fiber cable and a server-side optical fiber cable are introduced into the cassette from one side and the other side thereof, respectively, and then connected together in an internal space of the cassette via an adapter.
Patent Document 1: JP4795884B
Patent Document 2: JP3883113B

Here, an allowable bending radius is specified for an optical fiber, because if excessive bending is imposed on the optical fiber, failures in data transmission will occur. However, when optical fibers are connected using the above cassette movable back and forth in the front-rear direction, the optical fibers are likely to be bent at a bending radius less than the allowable bending radius, in an introduction zone where each of the optical fibers is introduced into the cassette, during pulling-out or pushing-in of the cassette.

The present invention has been made in view of the above problem, and we have appreciated that it would be desirable to, even in a case where optical fibers are connected together in a back-and-forth movable cassette, prevent the optical fibers from undergoing excessive bending.

### SUMMARY OF THE INVENTION

The present invention provides a distribution rack which comprises a connection section connecting an end of a first optical fiber and an end of a second optical fiber together, wherein the connection section has a plurality of cassettes each internally formed with a housing space capable of housing an end portion of the first optical fiber and movable in a given range in a front-rear direction, wherein each of the cassettes has a pair of laterally opposed sidewalls, one sidewall of which is formed with a first introduction port capable of introducing the first optical fiber into the housing space therethrough, each of the cassettes comprising an adapter configured to allow the end of the first optical fiber introduced through the first introduction port to be connected thereto, and allow the end of the second optical fiber to be connected thereto; and wherein a guide portion is formed at the first introduction port, the guide portion having a pair of front and rear guide walls forming therebetween a guide space expanding in the front-rear direction toward a lateral direction, wherein each of the front and rear guide walls is formed in a curved shape which is convex toward the guide space in plan view.

In the distribution rack of the present invention having the above feature, the first introduction port for introducing the first optical fiber therethrough is provided with the guide portion having the front and rear guide walls each formed in a curved shape which is convex toward the guide space, so that it is possible to prevent the first optical fiber from undergoing excessive bending, even when the cassette is moved in the front-rear direction.

Preferably, in the distribution rack of the present invention, the guide portion has an arm extending above the guide space.

According to this feature, even when the cassette is moved in the front-rear direction, the arm part can prevent the first optical fiber from being curved upwardly, thereby preventing the first optical fiber from undergoing excessive curvedness or up-down directional flexure.

Preferably, the distribution rack of the present invention comprises a lateral guide member provided beside the one sidewalls of the plurality of cassettes, and formed in a frontwardly curved shape in plan view, wherein the first optical fiber is introduced into the first introduction port while being guided along a side surface of the lateral guide member.

According to this feature, it is possible to prevent a portion of the first optical fiber outside the cassette from undergoing excessing curvedness.

More preferably, the lateral guide member is disposed such that a frontwardmost area of the lateral guide member is located rearward of the first introduction port of the cassette when the cassette is moved to a frontwardmost position, and is located frontward of the first introduction port when the cassette is moved to a rearwardmost position.

According to this feature, it is possible to suppress the movement of the portion of the first optical fiber outside the cassette due to the movement of the cassette.

More preferably, the above distribution rack further comprises a first optical fiber fixing member provided beside and rearward of the lateral guide member and capable of fixing a part of the first optical fiber.

According to this feature, it is possible to reliably guide the first optical fiber along the lateral guide member.

Preferably, in the distribution rack of the present invention, the cassette is formed with a second housing space located frontward of the adapter and capable of housing an end portion of the second optical fiber, and the other sidewall of the cassette is formed with a second introduction port located frontward of the adapter and capable of introducing the end portion of the second optical fiber into the second housing space therethrough.

According to this feature, the second optical fiber is housed in a front region of the cassette, so that the first optical fiber can be isolated from the second housing space, thereby preventing interference between the first optical fiber and the second optical fiber.

Preferably, in the distribution rack of the present invention, the cassette is bilaterally symmetrical, wherein the cassette has a second introduction port formed at a position symmetrically opposed to the first introduction port, the second introduction port being provided with a second supporting member configured to guide the second optical fiber.

According to this feature, one cassette can be used to handle both cases where the first optical fiber is introduced from the right side and from the left side. Further, the introduction of the first optical fiber and the installation of the second optical fiber-supporting member can be performed using the first and second optical fiber introduction ports formed bilaterally symmetrically.

More preferably, the second supporting member has a restraint portion configured to restrain the second optical fiber in a vertical direction.

According to this feature, the restraint portion can restrain the second optical fiber in the vertical direction, so that it is possible to prevent the second optical fiber from bending in the vertical direction, even when the cassette is moved in the front-rear direction.

More preferably, in the above distribution rack, the cassette has a swingable portion located on a front side thereof to define the second housing space and configured to be swingable about a swing axis extending in the lateral direction, the swingable portion having a restraint portion configured to restrain the second optical fiber in a vertical direction.

According to this feature, the swingable portion can be swung to facilitate housing the second optical fiber in the second housing space, and to prevent the second optical fiber from getting out of the second housing space, even when the cassette is moved in the front-rear direction.

Preferably, the distribution rack of the present invention comprises a second fixing portion provided beside the second sidewalls of the plurality cassettes and capable of fixing a part of the second optical fiber.

According to this feature, it is possible to, even when the cassette is moved, prevent the second optical fiber from moving along with the movement of the cassette.

The present invention makes it possible to, even in a case where optical fibers are connected together in a back-and-forth movable cassette, prevent the optical fibers from undergoing excessive bending.

### BRIEF DESCRIPTION OF DRAWINGS

FIG. 1 is a diagram showing one example of a cabling system in a data center including a distribution rack according to one embodiment of the present invention.
FIG. 2 is a front view showing the distribution rack according to this embodiment.
FIG. 3 is a perspective view showing the distribution rack according to this embodiment.
FIG. 4 is a perspective view showing a left cable fixing section illustrated in FIG. 2, in the distribution rack according to this embodiment, wherein it shows a state in which cables are installed in the left cable fixing section.
FIG. 5 is a perspective view showing the left cable fixing section illustrated in FIG. 2, in the distribution rack according to this embodiment, wherein it shows a state in which cables are omitted.
FIG. 6 is a perspective view showing a guide member of each cable fixing section in the distribution rack according to this embodiment.
FIG. 7 is a side view showing the guide member of the cable fixing section in the distribution rack according to this embodiment.
FIG. 8 is a perspective view showing a state in which an optical fiber cable is fixed to the guide member illustrated in FIG. 6.
FIG. 9 is an enlarged perspective view showing the configuration of a left termination section in the distribution rack illustrated in FIG. 2.
FIG. 10 is a perspective view showing a cassette constituting the left termination section illustrated in FIG. 9.
FIG. 11 is a top plan view showing the cassette of the left termination section illustrated in FIG. 9 and the vicinity thereof, wherein it shows a state in which the cassette is retracted.
FIG. 12 is a top plan view showing the cassette of the left termination section illustrated in FIG. 9 and the vicinity thereof, wherein it shows a state in which the cassette is pulled out.
FIG. 13 is a perspective view enlargedly showing a core wire guide member of the cassette illustrated in FIG. 10 and the vicinity thereof.
FIG. 14 is a top plan view enlargedly showing the core wire guide member of the cassette illustrated in FIG. 10 and the vicinity thereof.
FIG. 15 is a front view enlargedly showing a jumper management section of the distribution rack illustrated in FIG. 2.
FIG. 16 is a perspective view showing a cable manager constituting the jumper management section illustrated in FIG. 15.
FIG. 17 is a perspective view showing a base frame of a left few-core cable fixing section of the distribution rack illustrated in FIG. 2.
FIG. 18 is a perspective view enlargedly showing the left few-core cable fixing section of the distribution rack illustrated in FIG. 2, in a state in which a few-core cable is fixed thereto.
FIG. 19 is a perspective view showing a clip member to be used in the left few-core cable fixing section, in a state in which a cover thereof is opened.
FIG. 20 is a perspective view showing the clip member to be used in the left few-core cable fixing section, in a state in which the cover is closed to fix an optical fiber cable thereto.
FIG. 21 is a perspective view showing a clip member having another configuration.
FIG. 22 is a front view showing a few-core cable management section of the distribution rack illustrated in FIG. 2.

### DESCRIPTION OF EMBODIMENTS

With reference to the drawings, a distribution rack according to one embodiment of the present invention will now be described in detail. It should be noted that optical fiber cables are partly omitted in the drawings for the purpose of illustration.

### <Cabling System >

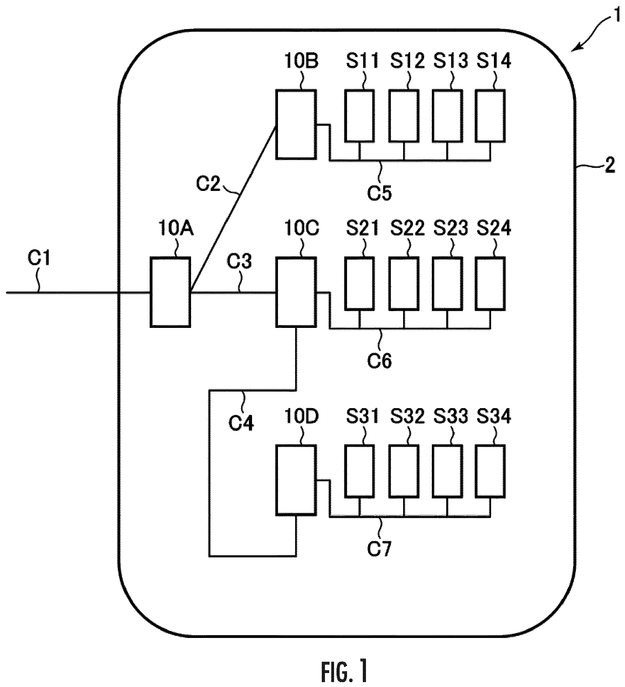

FIG. 1 is a diagram showing one example of a cabling system in a data center including a distribution rack according to one embodiment of the present invention. This cabling system 1 is a system for connecting a plurality of optical fiber-containing cables extending from a telecom company to servers disposed on various floors. As shown in FIG. 1, a bundle of cables C1 from a telecom company extends around a data center 2, and optical fibers contained in the cables C1 are distributed to servers S11 to S34 installed on floors via first to fourth distribution racks 10A, 10B, 10C, 10D. Specifically, as shown in FIG. 1, the first distribution rack 10A connects a part of a bundle of optical fiber-containing cables C1 extending from a telecom company, to two bundles of optical fiber-containing cables C2, C3 each extending from a respective one of the second distribution rack 10B and the third distribution rack 10C. The second distribution rack 10B couples the bundle of optical fiber-containing cables C2 extending from the first distribution rack 10A, to optical fiber-containing cables C5 extending from the servers S11 to S14. The third distribution rack 10C couples the bundle of optical fiber-containing cables C3 extending from the first distribution rack 10A, to optical fiber-containing cables C6 extending from the servers S21 to S24 and the bundle of optical fiber-containing cables C4 extending from the fourth distribution rack 10D. The fourth distribution rack 10D couples the bundle of optical fiber-containing cables C4 extending from the third distribution rack 10C, to optical fiber-containing cables C7 extending from the servers S31 to S34. It should be noted that, in the following description, the term "optical fiber cable" includes a multi-core cable containing a plurality of core wires, and a few-core cable containing a single core wire.

Based on the above configuration, among optical fibers of the cable C1 extending from the telecom company to the first distribution rack 10A, a part of the optical fibers are communicably connected to the servers S11 to S14 via the second distribution rack 10B, and a part of the remaining optical fibers are communicably connected to the servers S21 to S24 via the third distribution rack 10C. Further, the ultimately remaining optical fibers are communicably connected to the servers S31 to S34 via the third distribution rack 10C and the fourth distribution rack 10D. Cables led in each distribution rack and cables led out from each distribution rack are arranged, e.g., under system floors or behind system ceilings.

### <Distribution Rack >

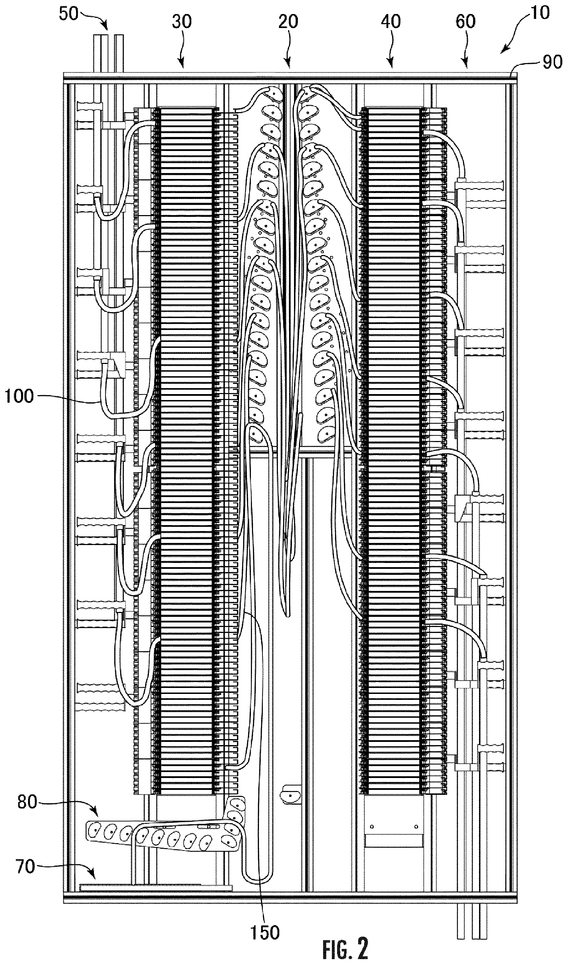

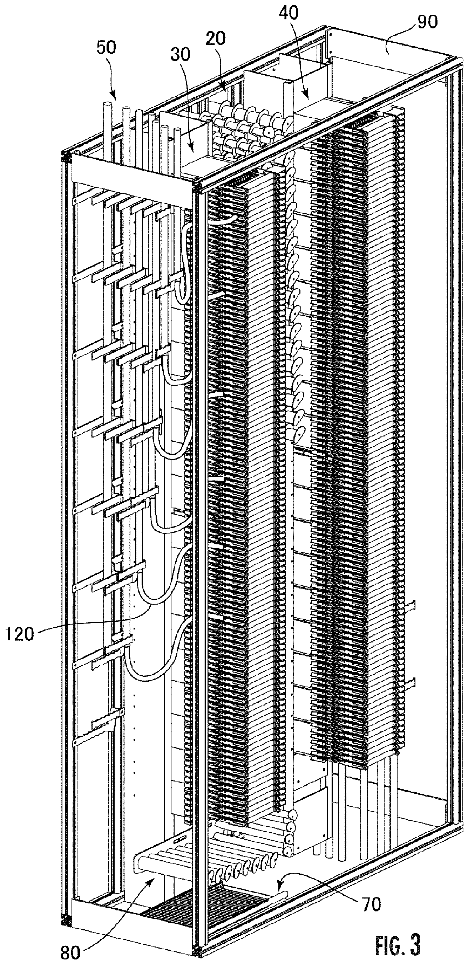

FIGS. 2 and 3 show the distribution rack according to this embodiment, wherein FIG. 2 is a front view, and FIG. 3 is a perspective view. As shown in FIGS. 2 and 3, a distribution rack 10 has a frame 90, and comprises, inside the frame 90: a jumper management section 20 provided in a laterally central region thereof; a left termination section 30 and a right termination section 40 provided on both lateral sides of the jumper management section 20; a left cable fixing section 50 and a right cable fixing section 60 each disposed laterally outward of a respective one of the termination sections 30, 40; a left few-core cable fixing section 70 provided on the left side of the bottom of the frame; and a few-core cable management section 80 provided just above the left few-core cable fixing section (cable fixing section) 70.

The distribution rack 10 is designed to connect an optical fiber of an optical fiber cable inserted from a left top or bottom portion of the frame 90, to an optical fiber of an optical fiber cable inserted from a right top or bottom portion of the frame 90. It may also be configured to connect an optical fiber of an optical fiber cable inserted from a left upper portion of the frame 90 and an optical fiber of an optical fiber cable inserted from a left or right bottom portion of the frame 90, to an optical fiber of an optical fiber cable inserted from a right or left top or bottom portion of the frame 90.

The following description will be made about a case where core wires of a plurality of multi-core cables led in the distribution rack 10 from a left upper side of FIG. 2 and a few-core cable led in the distribution rack 10 from a left lower side of FIG. 2 are coupled to core wires of a plurality of multi-core cables led in the distribution rack 10 from a right lower side of FIG. 2, within the distribution rack 10.

The left cable fixing section 50 is a region configured to fix a bundle 110 of optical fiber cables 100 inserted from a left region of a top portion of the frame 90, and lead the optical fiber cables toward the left termination section 30 at different height positions. In the left cable fixing section 50, a sheath of each of the optical fiber cables is removed, and only a ribbon fiber extends toward the left termination section 30.

The left termination section 30 is a region configured to connect a fiber core wire extending from the left cable fixing section 50, to one end of a jumper cable 150 or a single-core cable extending from the left few-core cable fixing section 70. The one end of the jumper cable 150 is connected to the optical fiber core wire of the optical fiber cable 100 via an adapter.

In the jumper management section 20, the jumper cable 150 is bridged between right and left sides thereof in a sagging state.

The right cable fixing section 60 is a region configured to fix a bundle 110 of optical fiber cables 100 inserted from a left region of a bottom portion of the frame 90, and lead the optical fiber cables toward the right termination section 40 at different height positions. In the right cable fixing section 60, a sheath of each of the optical fiber cables is removed, and only a ribbon fiber extends toward the right termination section 40.

The right termination section 40 is a region configured to connect a fiber core wire extending from the right cable fixing section 60, to the other end of the jumper cable 150. The other end of the jumper cable 150 is connected to the optical fiber core wire via an adapter.

The left few-core cable fixing section 70 is configured to fix an optical fiber cable inserted from the left region of the bottom portion of the frame 90, and lead the optical fiber cable as a single-core cable toward the left termination section 30 via the jumper management section. It should be noted here that the location of the left few-core cable fixing section 70 is not limited to the bottom portion of the distribution rack 10, but may be any lower portion of the distribution rack 10.

The few-core cable management section 80 is configured to support the optical fiber extending from the left few-core cable fixing section 70.

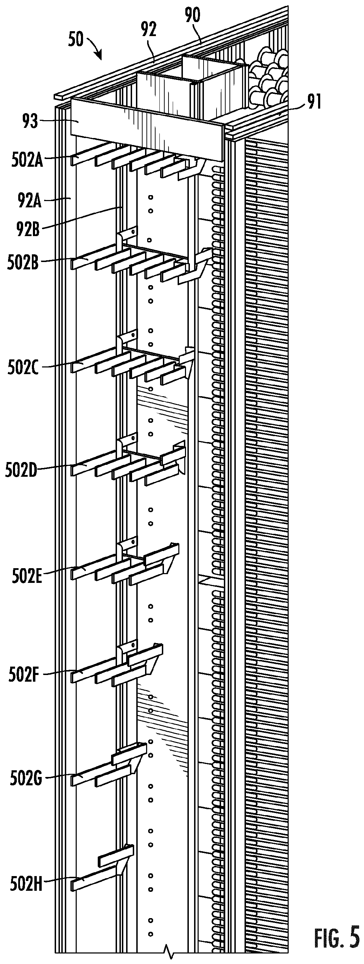

The frame 90 comprises a rectangular-shaped front frame 91, a rear frame 92 having the same shape as that of the front frame 91, and a plurality of cross members 93 (FIG. 5) are bridged between the front frame 91 and the rear frame 92. The front frame 91 and the rear frame 92 are held in parallel with a given distance therebetween by the cross members 93.

### <Cable Fixing Section >

The cable fixing section in the distribution rack illustrated in FIG. 2 will be described below. Although the following description will be made about the left cable fixing section, the right cable fixing section also has a bilaterally symmetrical similar configuration.

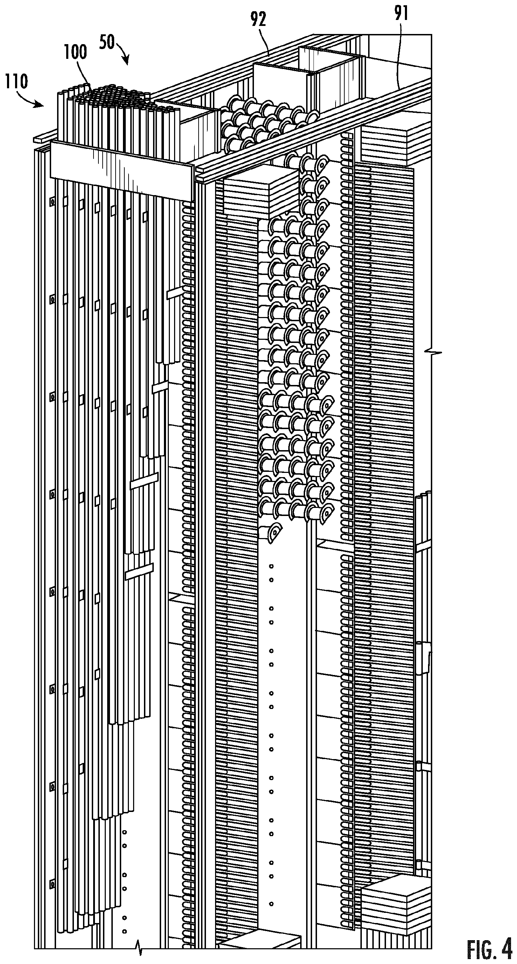

FIGS. 4 and 5 are perspective views showing the left cable fixing section illustrated in FIG. 2, in the distribution rack according to this embodiment, wherein FIG. 4 shows a state in which cables are installed in the left cable fixing section, and FIG. 5 shows a state in which cables are omitted. As shown in FIGS. 4 and 5, a plurality of bundle 110 of optical fiber cables 100 is inserted into the left cable fixing section 50. In the left cable fixing section 50, a plurality of guide members 502A to 502H are arranged side-by-side in an up-down (vertical) direction. Each of the guide members 502A to 502H is bridged between and fixed to a pair of vertically-extending pillar members 92A, 92B arranged, in a laterally space-apart relation, inside the rear frame 92 of the frame 90 constituting the distribution rack 10.

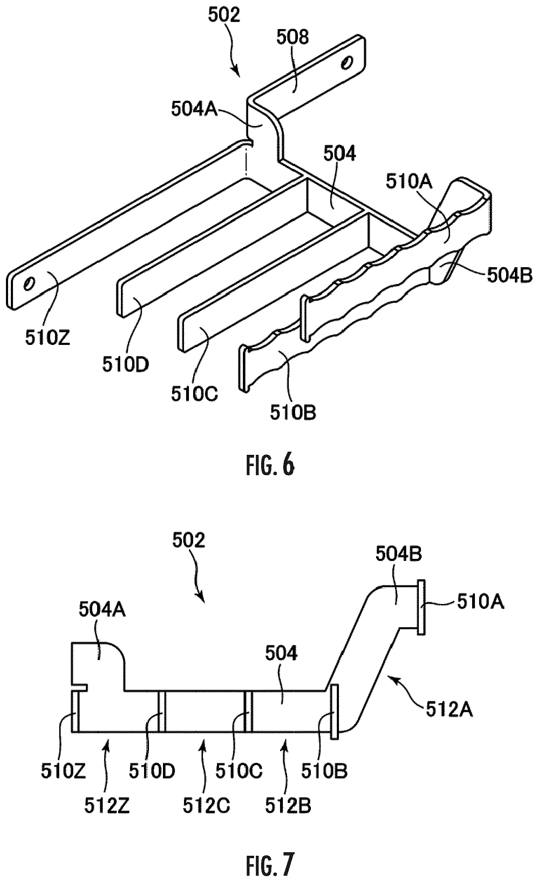

FIGS. 6 and 7 show the guide member of the cable fixing section in the distribution rack according to this embodiment, wherein FIG. 6 is a perspective view, and FIG. 7 is a side view. As shown in FIGS. 6 and 7, the guide member 502 comprises: a base part 504 extending in a front-rear direction; an attaching part 508 expending laterally from a rear end of the base part 504; and a plurality of arm parts 510A, 510B, 510C, 510D, 510Z extending from the base part 504.

The base part 504 is a plate-shaped part whose surface becomes a vertical surface in an attached state and which extends in the front-rear direction. The base part 504 has an intermediate area 504C extending in a constant up-down directional width, a front end area 504B extending obliquely upwardly with respect to the intermediate area 504C, and a rear end area 504A having an up-down directional width expanding upwardly.

The attaching part 508 is a plate-shaped part whose surface becomes vertical in the attached state and which extends laterally inwardly from an upper area of the rear end area 504A.

Each of the arm parts 510A, 510B, 510C, 510D, 510Z is a plate-shaped part whose surface becomes a vertical surface in the attached state and which extends laterally outwardly from the base part 504. Front-rear directional intervals between adjacent ones of the arm parts 510A, 510B, 510C, 510D, 510Z are set to become approximately equal. Further, in all the guide members 502 of the left cable fixing section 50, the front-rear directional intervals between adjacent ones of the arm parts 510 are set to be equal to each other. It is to be understood that the interval may be arbitrarily set depending on the diameter of a cable to be routed or the number of the cables.

The frontwardmost arm part 504A is connected to a front end of the front end area 504B. Each of upper and lower edges of the frontwardmost arm part 504A is formed in a wave shape with a continuous undulation.

The second-frontwardmost arm part 510B is connected to a boundary between the intermediate area 504C and the front end area 504B. Each of upper and lower edges of the second-frontwardmost arm part 504B is formed in a wave shape with a continuous undulation.

The rearwardmost arm part 510Z extends laterally outwardly from a lower area of the rear end area 504A of the base part 504.

Based on the above configuration, receiving spaces 512A, 512b, 512C, 512Z each opened laterally outwardly are formed between adjacent ones of the arm parts 510A, 510B, 510C, 510D, 510Z. Each of the receiving spaces 512A, 512b, 512C, 512Z is opened laterally.

As shown in FIG. 5, the first to eighth guide members 502 are attached to the left cable fixing section 50 at approximately even intervals in the downward direction from the top. Each of the guide members 502 is fixed by screwing distal ends of the rearwardmost arm part 510Z and the attaching part 508 to the pair of pillar members 92A, 92B, respectively. Further, in the left cable fixing section 50 in which the optical fiber cables extend from the top thereof, the number of the arm parts 510 in a lower one of the guide members 502 is set to be equal to or less than that in an upper one of the guide members 502.

As shown in FIG. 5, each of the first guide member 502A and the second guide member 502B has eight arm parts 510, and the third guide member 502C, the fourth guide member 502D and the fifth guide member 502E have, respectively, seven arm parts 510, six arm parts 510 and five arm parts 510. Further, the sixth guide member 502F, the seventh guide member 502G and the eighth guide member 502H have, respectively, four arm parts 510, three arm parts 510 and two arm parts 510.

As shown in FIG. 4, in the left cable fixing section 50, optical fiber cables extend downwardly from the top of the left cable fixing section 50, while being aligned to form a plurality of rows in the right-left (lateral) direction and a plurality of columns in the front-rear direction. The optical fiber cables 100 are received in each of the receiving spaces 512 in a state in which they are aligned to form one or two columns in the front-rear direction and three to five rows in the right-left direction. Each of the optical fiber cables 100 is received in up-down directionally corresponding ones of the receiving spaces 512 of the guide members 502.

The rearwardmost column of optical fiber cables 100 are received in and guided by the rearwardmost receiving spaces 512Z of the first to eighth guide members 502A to 502H, and fixed to the eighth guide member 502H, wherein a sheath of each of them is peeled off at a position below the eighth guide member 502H.

The second-and third-rearwardmost columns of optical fiber cables 100 are received in and guided by the second-rearwardmost receiving spaces 512 of the first to seventh guide members 502A to 502G, and fixed to the seventh guide member 502G, wherein a sheath of each of them is peeled off at a position below the seventh guide member 502G.

The fourth-and fifth-rearwardmost columns of optical fiber cables 100 are received in and guided by the third-rearwardmost receiving spaces 512 of the first to sixth guide members 502Ato 502F, and fixed to the sixth guide member 502F, wherein a sheath of each of them is peeled off at a position below the sixth guide member 502F.

The sixth-and seventh-rearwardmost columns of optical fiber cables 100 are received in and guided by the fourth-rearwardmost receiving spaces 512 of the first to fifth guide members 502A to 502E, and fixed to the fifth guide member 502E, wherein a sheath of each of them is peeled off at a position below the fifth guide member 502E.

The eighth-and ninth-rearwardmost columns of optical fiber cables 100 are received in and guided by the fifth-rearwardmost receiving spaces 512 of the first to fourth guide members 502A to 502D, and fixed to the fourth guide member 502D, wherein a sheath of each of them is peeled off at a position below the fourth guide member 502D.

The tenth-and eleventh-rearwardmost columns of optical fiber cables 100 are received in and guided by the sixth-rearwardmost receiving spaces 512 of the first to third guide members 502A to 502C, and fixed to the third guide member 502C, wherein a sheath of each of them is peeled off at a position below the third guide member 502C.

The twelfth-and thirteenth-rearwardmost columns of optical fiber cables 100 are received in and guided by the seventh-rearwardmost receiving spaces 512 of the first and second guide members 502A, 502B, and fixed to the second guide member 502B, wherein a sheath of each of them is peeled off at a position below the second guide member 502B.

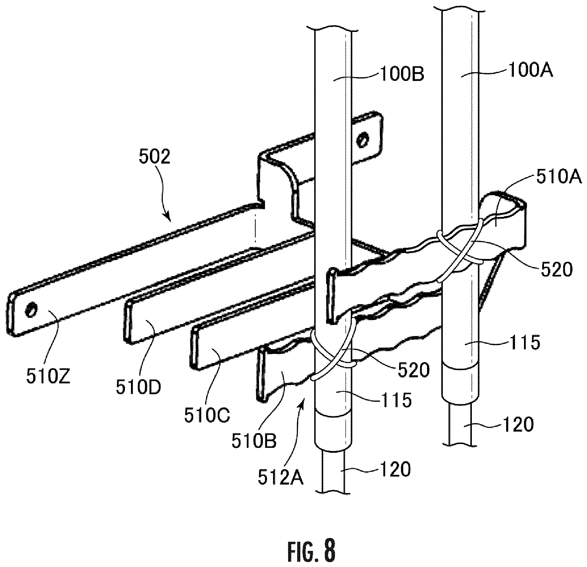

FIG. 8 is a perspective view showing a state in which an optical fiber cable is fixed to the guide member illustrated in FIG. 6. In FIG. 8, for the purpose of illustration, only one of a front column of optical fiber cables 100A and one of a rear column of optical fiber cables 100B, in the frontwardmost receiving space 512A, are shown, and the remaining optical fiber cables 100 are omitted.

The optical fiber cable 100 comprises: an optical fiber core wire 120 obtained by covering a bare fiber made of glass and composed of a core and a clad, with UV coating or the like; and a sheath (outer covering) surrounding one or more optical fiber core wires. In this embodiment, the optical fiber core wire is used to form a cable, in the form of a tape core wire (ribbon fiber) obtained by forming a plurality of optical fiber core wires aligned side-by-side, into a tape-like shape.

Each of the front column of optical fiber cables 100A among optical fiber cables 100 received in the frontwardmost receiving space 512A is fixed to the frontwardmost arm part 510A by a binding band 520. Each of the upper and lower edges of the frontwardmost arm part 510A is formed with an undulation, as mentioned above. Thus, during the fixing operation, it is possible to restrain the optical fiber cable 100A from moving laterally. A sheath 115 of each of the front column of optical fiber cables 100A is removed at a position below the frontwardmost arm part 510A, so as to expose the ribbon fiber 120.

Each of the rear column of optical fiber cables 100B among the optical fiber cables 100 received in the frontwardmost receiving space 512A is fixed to the second-frontwardmost arm part 510B by a binding band 520. Each of the upper and lower edges of the second-frontwardmost arm part 510B is formed with an undulation, and thus, during the fixing, it is possible to restrain the optical fiber cable 100B from moving laterally. A sheath 115 of each of the front column of optical fiber cables 100B is removed at a position below the second-frontwardmost arm part 510B, so as to expose the ribbon fiber 120. Although FIG. 8 shows a single-core optical fiber cable, a multi-core optical fiber cable can be fixed in a similar manner.

The ribbon fiber 120 of the optical fiber cable 100 whose sheath had been peeled off in the above manner is led to the cassettes 320 of the left termination section 30 located at approximately the same height position as that of the ribbon fiber 120.

Except that the right cable fixing section 60 is bilaterally symmetrical to the left cable fixing section 50, they are identical in terms of configuration.

In this embodiment, the first to eighth guide members 502 of the left cable fixing section 50 has the arm parts 510A, 510B, 510C, 510D, 510Z, and the receiving spaces 512A, 512b, 512C, 512Z each opened laterally outwardly are formed between adjacent ones of the arm parts. This makes it possible to easily fix optical fiber cables 100 by installing the optical fiber cables 100 in the plurality of receiving spaces 512A, 512b, 512C, 512Z from the lateral side thereof, and fixing each of the optical fiber cables 100 to one of the arm parts.

In this embodiment, when optical fiber cables 100 is arranged in a single column in the front-rear direction, the optical fiber cables 100 can be fixed to the frontwardmost arm part 510A, and, when optical fiber cables 100 are arranged in a plurality of columns in the front-rear direction, the optical fiber cables 100 can be fixed to the frontwardmost arm part 510A and the second-frontwardmost arm part 510B, in two groups, and thus, even in a case where optical fiber cables 100 are arranged in high density, it is possible to easily fix the optical fiber cables 100.

In this embodiment, the frontwardmost arm part 510A is provided above the second-frontwardmost arm part 510B. Thus, in a case where a plurality of columns of optical fiber cables 100 arranged in the same receiving space are fixed, the columns of optical fiber cables 100 can be fixed, respectively, to the arm parts at different height positions. Further, when the cables are fixed to the second-frontwardmost arm part 510B, it is possible to prevent the second-frontwardmost arm part 510B from hiding behind the frontwardmost arm part 510A, thereby improving working efficiency of the fixing operation.

In this embodiment, each of the upper and lower edges of the frontwardmost arm part 510A and the upper and lower edges of the second-frontwardmost arm part 510B is formed with an undulation. This makes it possible to prevent an optical fiber cable 100 from moving laterally even when fixing the optical fiber cable 100 using the binding band 520 or the like. It should be noted here that such an undulation may be provided in only one of the upper and lower edges, or may be provided in one of the frontwardmost arm part 510A and the second-frontwardmost arm part 510B.

In this embodiment, the first to eighth guide members 502 are configured such that a lower one thereof is gradually reduced in terms of the number of arm parts. This makes it possible to fix a front-side column of optical fiber cables 100 to the arm part on a relatively upper side of the cable fixing section, and fix a rear-side column of optical fiber cables 100 to the arm part on a relatively lower side of the cable fixing section, thereby facilitating the fixing operation for optical fiber cables 100.

### <Termination Section >

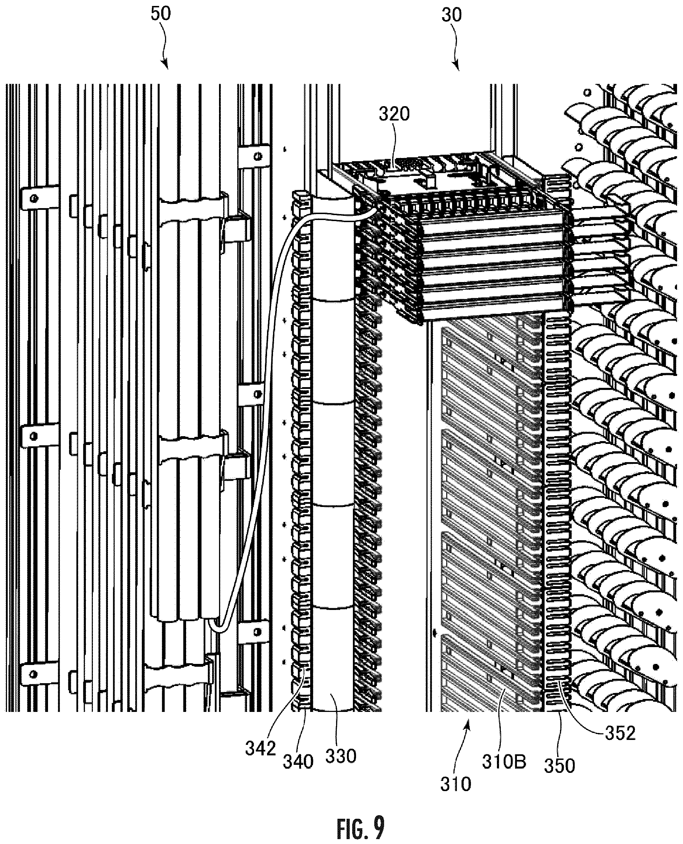

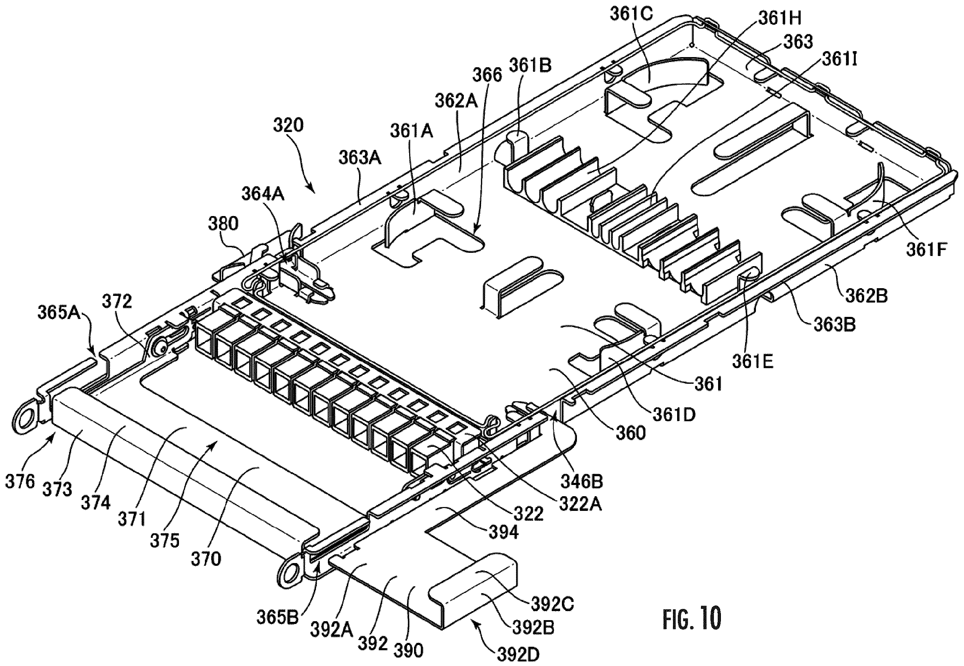

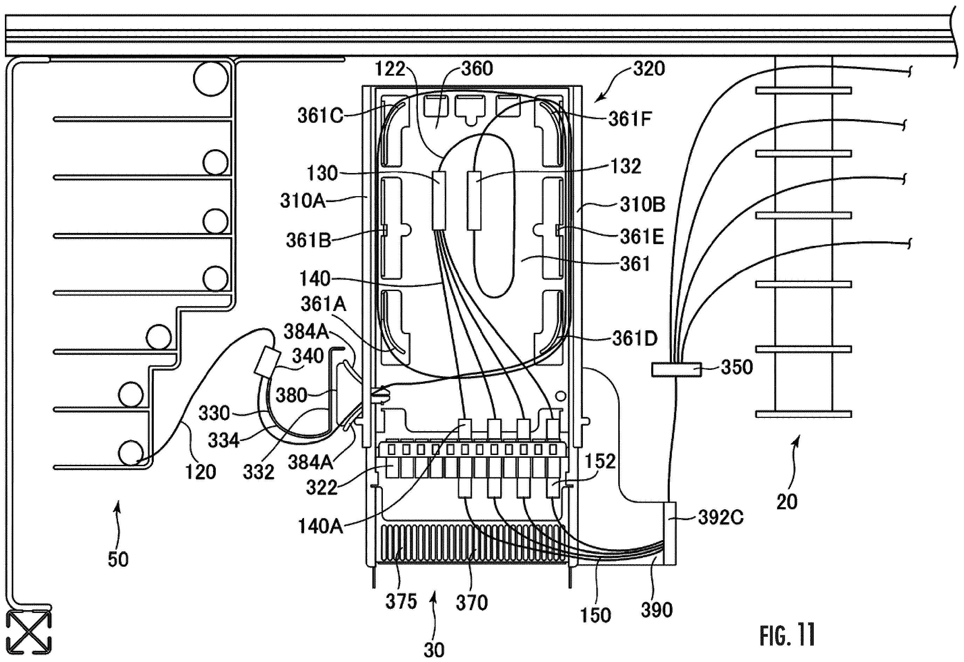

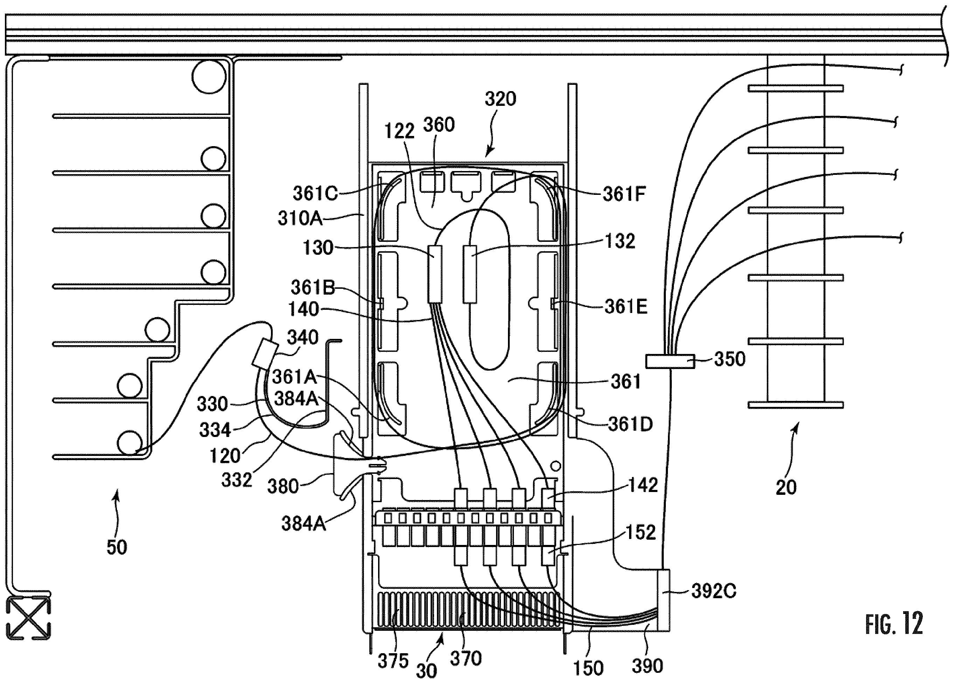

The configuration of the left termination section 30 will be described below. FIG. 9 is an enlarged perspective view showing the configuration of the left termination section in the distribution rack illustrated in FIG. 2. FIG. 10 is a perspective view showing the cassette constituting the left termination section illustrated in FIG. 9. FIGS. 11 and 12 show the cassette of the left termination section illustrated in FIG. 9 and the vicinity thereof, wherein FIG. 11 shows a state in which the cassette is retracted, and FIG. 12 shows a state in which the cassette is pulled out such that a jumper cable-side connector can be attached/detached.

As shown in FIG. 9, the left termination section comprises: a rail frame 310 fixed to the frame 90 with a given lateral distance therebetween; a plurality of cassettes 320 supported by the rail frame 310; a lateral guide member 330 provided at a position front of the rail frame 310 on the side of the left cable fixing section 50; a core wire fixing portion (optical fiber cable fixing member) 340 disposed on the lateral side of the lateral guide member 330; and a jumper cable fixing portion 350 disposed front of a right portion of the rail frame 310 on the side of the jumper management section 20.

The rail frame 310 is composed of a plurality of pairs of left and right rails 310A, 310B arranged with a given distance therebetween in the up-down direction. Each of the left and right rails 310A, 310B is composed of a member formed to extend in the front-rear direction, wherein a groove is formed in each of opposed surfaces of the rails 310A, 310B to extend in the front-rear direction.

Each of the cassettes 320 is made of metal such as stainless steel, resin or the like, and comprised a cassette body 360, and a swingable portion 370 swingably attached to a front end of the cassette body 360. The cassette 320 is configured such that the after-mentioned sliders 363A, 363B thereof are supported, respectively, by the rails 310A, 310B, slidably in the front-rear direction. The cassette 320 can selectively take a detached position where it is detached from the rail frame 310, a pullout position where it is pulled out while being supported by the rails 310A, 310B, and a retracted position where it is retracted while being supported by the rails 310A, 310B. When optical fibers are routed inside the cassette 320, it is desirable to conduct such an operation in a state in which the cassette 320 is taken out from the rail frame 310.

The cassette body 360 comprises: a bottom plate part 361; a pair of sidewall parts 362A, 362B each provided to stand from a respective one of opposed lateral edges of the bottom plate part 361; and a rear wall part 363 provided to stand from a rear edge of the bottom plate part 361.

The bottom plate part 361 is a region formed in an approximately rectangular plate shape.

The pair of sidewall parts 362A, 362B are standingly provided to extend in the front-rear direction, respectively, along the opposed lateral side edges of the bottom plate part 361. A front-rear directional length of each of the sidewall parts 362A, 362B is greater than that of the bottom plate part 361, and a part of each of the sidewall parts 362A, 362B extends frontwardly beyond the bottom plate part 361. A pair of slide parts 363A, 363B are provided to extend, respectively, from upper edges of the sidewall parts 362A, 362B, laterally outwardly. Each of the slide parts 363A, 363B is formed over the entire front-rear directional length of a corresponding one of the sidewall parts 362A, 362B to have an approximately constant width. The pair of the sidewall parts 362A, 362B are formed, respectively, with two opening (first and second introduction ports) 364A, 364B at positions on the rear side of the after-mentioned adapters 322. Here, as described in detail later, the opening 364A on the side of the left cable fixing section 50 functions as an opening for introducing a core wire of an optical fiber cable 100 therethrough, wherein a core wire guide member 380 is attached thereto. Further, the opening 364B on the side of the jumper management section 20 functions as a region for attaching a jumper cable supporting member 326 thereto.

The pair of the sidewall parts 362A, 362B are formed, respectively, with cutouts 365A, 365B opened upwardly at front ends of the sidewall parts 362A, 362B.

The rear wall part 363 is provided to extend between the pair of the sidewall parts 362A, 362B.

An adapter retaining portion 322A is provided along a front edge of the bottom plate part 361 swingably in the front-rear direction, and a plurality of adapters 322 are attached to the adapter retaining portion 322A such that they are arranged side-by-side in the lateral direction over the entire width of the bottom plate part 361. The plurality of adapters 322, the pair of sidewall parts 362A, 362B and the rear wall part 363 surroundingly define a core wire housing space 366 within the cassette 320.

A part of the bottom plate part 361 facing the core wire housing space 366 is formed with a left front-side guide protrusion 361A, a left intermediate guide protrusion 361B, a left rear-side guide protrusion 361C, a right front-side guide protrusion 361D, a right intermediate guide protrusion 361E, and a right rear-side guide protrusion 361F. Each of these guide protrusions 361A, 361B, 361C, 361D, 361E, 361F are composed of a plate-shaped member provided to stand perpendicularly to the bottom plate part 361.

Each of the left front-side guide protrusion 361A and the right front-side guide protrusion 361D is located rearward of a respective one of the openings 364A, 364B. Each of the left front-side guide protrusion 361A and the right front-side guide protrusion 361D has a rear part formed in a plate shape extending in the front-rear direction, and a front part extending frontwardly while curving toward a central region of the cassette.

Each of the left rear-side guide protrusion 361C and the right rear-side guide protrusion 361F is located around a respective one of two rear corners of the bottom plate part 361. Each of the left rear-side guide protrusion 361C and the right rear-side guide protrusion 361F has a front part formed in a plate shape extending in the front-rear direction, and a rear part extending rearwardly while curving toward the central region of the cassette.

The left intermediate guide protrusion 361B is located between the rear part of the left front-side guide protrusion 361A and the front part of the left rear-side guide protrusion 361C, in a state in which they are aligned with each other in the front-rear direction.

The right intermediate guide protrusion 361E is located between the rear part of the right front-side guide protrusion 361D and the front part of the right rear-side guide protrusion 361F, in a state in which they are aligned with each other in the front-rear direction.

The swingable portion 370 comprises: a bottom plate part 371; a pair of sidewall parts 372 each provided to stand along a respective one of opposed lateral edges of the bottom plate part 371; a front face-forming part 373 provided to stand along a front edge of the bottom plate part 371 perpendicularly to the bottom plate part 371; and a fold-back part 374 provided to extend rearwardly from an upper edge of the front face-forming part 373. The swingable portion 370 is configured such that rear ends of the pair of sidewall parts 372 is pivotally connected, respectively, to the sidewall parts 362A, 362B of the cassette 320 at positions frontward of the adapters 322. The swingable portion 370 is configured to be swingable between a state in which the bottom plate part 371 is set horizontally and located on the same plane as that of the bottom plate part 361 of the cassette 320, and a state in which the bottom plate part 371 is tilted obliquely downwardly and frontwardly.

When the swingable portion 370 is set in a horizontal posture, the pair of sidewall parts 372, the front face-forming part 373, the fold-back part 374 and the adapters 322 surroundingly define a jumper housing space 375.

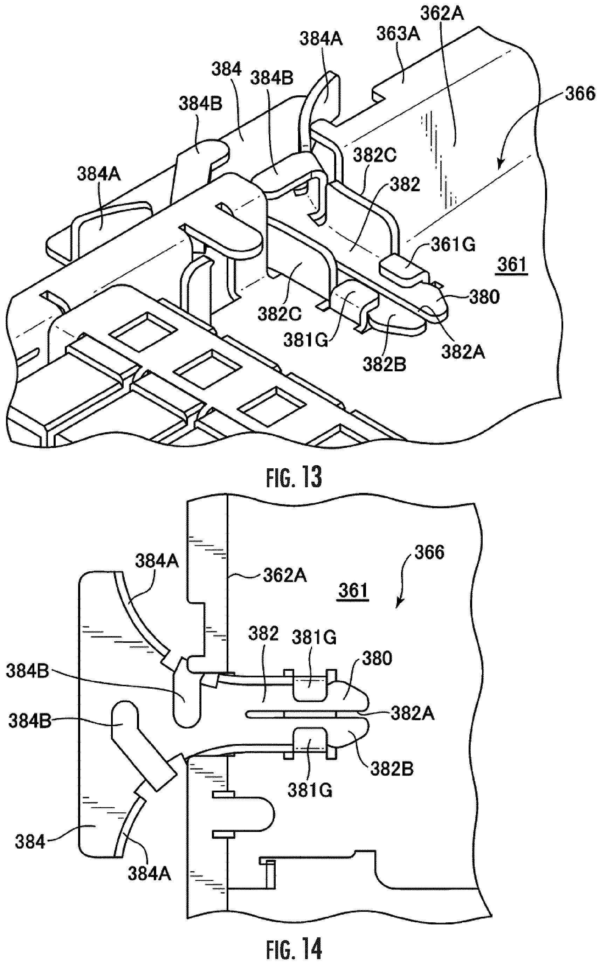

FIGS. 13 and 14 enlargedly show the core wire guide member of the cassette illustrated in FIG. 10 and the vicinity thereof, wherein FIG. 13 is a perspective view, and FIG. 14 is a top plan view.

As shown in FIGS. 13 and 14, the core wire guide member 380 has a base end part 382, and a widened part 384 extending from the base end part 382 toward the lateral direction while gradually expanding in the front-rear direction.

The base end part 382 is a region in which it extends in an approximately constant width and which is located inside the core wire housing space 366 in an attached state thereof. The base end part 382 is formed with a slit 382A extending from a top end of the base end part 382 along a widthwise center line thereof. The top end 382 B of the base end part 382 is formed to have a width larger than that of a part of the base end part 382 on the side of the widened part 384. A pair of guide walls 382C are formed, respectively, along opposed edges of the part of the base end part 382 on the side of the widened part 384.

The widened part 384 is formed such that a front-rear directional width thereof is expanded toward a laterally outward direction. A pair of guide walls 384A are formed, respectively, along front-rear directionally opposed edges of a widening part of the widened part 384. The pair of guide walls 384A extend in a laterally frontward direction and in a laterally rearward direction, respectively. Each of the guide walls 384A is formed in a curved shape which is convex toward a front-rear directionally central region of the widened part 384. Further, the widened part 384 is provided with a pair of arms 384B each extending thereabove in a covering manner.

The bottom plate part 361 has a pair of holding protrusions 361G formed in the vicinity of the opening 364A such that they are opposed to each other in the front-rear direction. The holding protrusions 361G stand from the bottom plate part 361 and then bend such that they extend toward each other. When the base end part 382 is inserted into the opening 364A from the outside, and then fitted between the pair of holding protrusions 361G, the base end part 382 is placed in a state in which the top end 382B thereof is located inside the holding protrusions 361G, and an upper surface thereof is covered by the pair of holding protrusions 361G, whereby the core wire guide member 380 can be fixed to the cassette body 360.

Further, a part of the bottom plate part 361 corresponding to the front-rear directionally intermediate region of the core wire housing space 366 is formed with the after-mentioned sleeve retaining part 3611, and a branching portion retaining part 361H for retaining the after-mentioned branching portion 130. The branching portion retaining part 361H is provided on both lateral sides of the sleeve retaining part 3611.

The jumper cable supporting member 390 has a member body 392 located on a laterally outward side of the cutout 365B, and an attaching part 394 extending from the member body 392 along the sidewall part 362B.

The attaching part 394 extends in the front-rear direction along an outer surface of the sidewall part 362B, and a distal end thereof is bent toward the cassette 320. The distal end of the attaching part 394 is formed in a similar shape to that of the base end part 382 of the core wire guide portion 324, and the jumper cable supporting member 390 is fixed to the cassette body 360 by inserting the attaching part into the opening 364B.

In an attached state, the member body 392 is located beside the cutout 365B. The member body 392 has: a base plate part 392A extending toward the jumper management section 20; a standing part 392B standing upwardly from an edge of the base plate part 392A on the side of the jumper management section 20; and a fold-back part 392C extending from an upper edge of the standing part 392B toward the swingable portion 370.

The slide parts 363A, 363B of the cassette body 360 are set, respectively, in the grooves of the rails 310A, 310B, so as to allow the cassette 320 to be held movably in the front-rear direction. Thus, the cassette 320 can selectively take the retracted position where it is pushed rearwardly, the pullout position where it is pulled frontwardly, and the detached position where it is detached from the rail frame 310. In the pullout position, it is possible to swing the swingable portion 370 with respect to the cassette body 360. When laying out a ribbon fiber 120 of an optical cable 100, this operation may be conducted in a state in which the cassette 320 is set in the detached position, and, when laying out a jumper cable 150, this operation may be conducted in a state in which the cassette 320 is set in the pullout position, and further the swingable portion 370 is swung downwardly.

In a state in which the cassette 320 is set in the retracted position, the lateral guide member 330 is disposed laterally outward of and adjacent to the core wire guide member 380. The lateral guide member 330 extends vertically with a constant horizontal sectional shape.

The lateral guide member 330 includes: a flat surface part 332 extending along a top end of the widened part 384 of the core wire guide member 380 in the state in which the cassette 320 is set in the retracted position; and a curved surface part 334 arcuately extending from a front end of the flat surface part 332 to the core wire fixing portion 340.

In the state in which the cassette 320 is set in the retracted position, a front end of the flat surface part 332 is approximately aligned, in the front-rear direction, with a front end of the widened part 384 of the core wire guide member 380.

The core wire fixing portion 340 is provided rearward of and continuous with the curved surface part 334 of the lateral guide member 330.
The core wire fixing portion 340 has a plurality of slits 342 provided at given intervals and each opened laterally, frontwardly and rearwardly in a horizontal direction.

The jumper cable fixing portion 350 is disposed rearward of the jumper cable supporting member 390. The jumper cable fixing portion 350 has a plurality of slits 352 provided at given intervals and each opened laterally, frontwardly and rearwardly in a horizontal direction. Each of the slits 352 is opened on the front and rear side of the jumper cable fixing portion 350 and the lateral side of the jumper cable fixing portion 350 facing the jumper management section 20.

A ribbon fiber 120 of an optical fiber cable 100 whose sheath had been peeled off in the left cable fixing section 50 is led to extend toward the core wire fixing portion 340, and clamped by one of the slits 342 of the core wire fixing portion 340, so that it is fixed to the core wire fixing portion 340. Here, it is desirable that one of the slits 342 of the core wire fixing portion 340 to which the ribbon fiber 120 is fixed has a height position corresponding to that of one of the cassettes 320 into which the ribbon fiber 120 is subsequently introduced.

The ribbon fiber 120 fixed to the core wire fixing portion 340 is led along the lateral guide member 330, and further lead between the pair of guide walls 384A of the widened part 384 of the core wire guide member 380. Then, the ribbon fiber 120 is introduced from the opening 364A of the cassette 320 into the core wire housing space 366. As shown in FIGS. 13 and 14, after the ribbon fiber 120 introduced into the core wire housing space 366 extends rightwardly, it is lead rearwardly along the right front-side guide protrusion 361D. Then, after extending rearwardly, the ribbon fiber 120 is led laterally outwardly (leftwardly) by the right rear-side guide protrusion 361F. Then, after extending laterally outwardly, the ribbon fiber 120 is led frontwardly by the left rear-side guide protrusion 361C. Then, after extending frontwardly, the ribbon fiber 120 is led laterally inwardly (rightwardly) by the left front-side guide protrusion 361A. Then, after extending laterally inwardly, the ribbon fiber 120 is led rearwardly by the right front-side guide protrusion 361D. Then, after extending rearwardly, the ribbon fiber 120 is led toward a central region of the core wire housing space 366 by the right rear-side guide protrusion 361F, and connected to a tape core wire 122 from a fan-out branching portion 130 by a fusion sleeve 132.

The fan-out branching portion 130 is configured to divide the tape core wire 122 connected to the ribbon fiber 120 by the fusion sleeve 132, into a plurality of single-core fibers 140. Each of the single-core fibers 140 is surrounded by a protective tube or a sheath, and a connector 140A is attached to an end thereof. Each of the single-core fibers 140 extends frontwardly from the branching portion 130, and the connector 140A at the end of the single-core fiber 140 is connected to one of the adapters 322 from the rear side of the adapter 322.

Further, a connector 152 of a jumper cable 150 is connected to one of the adapters 322 from the front side of the adapter 322. A jumper cable 150 is led to extend from the jumper management section 20, and clamped by one of the slits 342 of the jumper cable fixing portion 350 located at a height position corresponding to that of one of the cassettes 320 to which the jumper cable 150 is introduced. Then, the jumper cable 150 is introduced from the jumper cable fixing portion 350 into the jumper cable supporting member 390 from the rear side of the jumper cable supporting member 390. The jumper cable 150 is guided into the cutout 365B while being held by the standing part 392B and the fold-back part 392C of the jumper cable supporting member 390. Then, the jumper cable 150 is guided from the cutout 365B into the jumper housing space 375, and the connector at the end thereof is connected to one of the adapter 322 from the front side of the adapter 322.

When laying out the ribbon fiber 120 within the cassette 320, the cassette 320 is set in the detached position where it is moved frontwardly and detached, to conduct this operation.

In the state in which the cassette 320 is detached from the rail frame 310, the ribbon fiber 120 is introduced from the opening 364A of the cassette 320 into the core wire housing space 366. Then, the ribbon fiber 120 introduced into the core wire housing space 366 is led to go around the core wire housing space 366 as many times as needed, along the right front-side guide protrusion 361D, the right rear-side guide protrusion 361F, the left rear-side guide protrusion 361C and the left front-side guide protrusion 361A, and further bent toward the central region of the core wire housing space 366, along the right front-side guide protrusion 361D and the right rear-side guide protrusion 361F. Then, the ribbon fiber 120 is connected to the tape core wire 122, and reinforced by the fusion sleeve 132. Here, the fan-out branching portion 130 and the single-core fibers 140 and the tape core wire 122 connected to the branching portion 130 may be preliminarily attached to the cassette 320, and the connectors 140A of the single-core fibers 140 may be preliminarily connected to the adapters.

After the ribbon fiber 120 is laid out within the core wire housing space 366 in the above manner, the cassette 320 is attached to the rail frame 310, and set in the pullout position. Then, in this pullout position, the ribbon fiber 120 is disposed to extend along the lateral guide member 330 such that no excessive bending is applied thereto, and inserted in one of the slits 342 of the core wire fixing portion 340.

Thus, even when the cassette 320 is displaced in the front-rear direction, the ribbon fiber 120 can be led to extend from the core wire fixing portion 340 along an outer surface of the lateral guide member 330, and further guided to the opening 364A along the rear guide wall 384A of the core wire guide member 380. This makes it possible to prevent the ribbon fiber 120 from undergoing excessive bending.

Further, when laying out the jumper cable 150, this operation is conducted in a state in which the cassette 320 is moved frontwardly, and further the swingable portion 370 is swung such that it is tilted obliquely downwardly with respect to the cassette body 360.

First of all, the jumper cable 150 extending from the jumper management section 20 is inserted in one of the slits 352 of the jumper cable fixing portion 350 corresponding to one of the cassettes 320 to which the jumper cable 150 is laid out. Then, the jumper cable 150 is guided frontwardly from the jumper cable fixing portion 350, and led to the cutout 365B while being placed on the jumper cable supporting member 390. In this process, the jumper cable 150 is surrounded by a restraint portion 392D composed of the base plate part 392A, the standing part 392B and the fold-back part 392C of the jumper cable supporting member 390, so that it is possible to hold the jumper cable 150 so as not to spread in a height direction and in the lateral direction. Then, the connector 152 at the end of the jumper cable 150 is connected to one of the adapters 322 from the front side of the adapter 322. Then, after all of the jumper cables 150 to be housed in this cassette 320 are laid out in the same manner, the swingable portion 370 is swung such that it becomes parallel to the cassette body 360. In this process, the jumper cable 150 is disposed such that it is surrounded by a restraint portion 376 composed of the bottom plate part 371, the front face-forming part 373 and the fold-back part 374. This allows the jumper cable 150 to be housed in the jumper housing space 375 so as not to spread in the up-down direction.

Then, the cassette 320 is pushed and returned to the retracted position. In this process, the ribbon fiber 120 is guided such that it is bent along the front guide wall 384A of the core wire guide member 380, so that it is possible to prevent the ribbon fiber 120 from undergoing excessive bending.

The core wire guide member 380 is provided in the above manner. This, when the cassette 320 is set in a cabling position where it is pulled out frontwardly, the ribbon fiber 120 is guided by the lateral guide member 330 and the rear guide wall 384A, and, when the cassette 320 is set in the retracted position where it is pushed rearwardly, the ribbon fiber 120 is guided by the lateral guide member 330 and the front guide wall 384A, so that it is possible to prevent excessive bending. In this embodiment, the core wire guide member 380 is formed as a separate component from the cassette 320. Alternatively, it may be formed integrally with the cassette 320.

In this embodiment, the core wire guide member 380 having the front and rear guide walls 384A each formed in a curved shape which is convex toward a guide space defined therebetween is provided in the opening 364A for introduction of the ribbon fiber 120, so that it is possible to prevent the ribbon fiber 120 from undergoing excessive bending, even when the cassette 320 is moved in the front-rear direction.

In this embodiment, the core wire guide member 380 has the arms 384B extending above the guide space, so that, even when the cassette 320 is moved in the front-rear direction, the arms 384B can prevent the ribbon fiber 120 from bending upwardly, thereby preventing the ribbon fiber 120 from undergoing excessive curvedness or up-down directional flexure.

In this embodiment, the lateral guide member 330 is provided beside the sidewalls 362A of the plurality of cassettes 320, and formed in a frontwardly curved shape in plan view, wherein the ribbon fiber 120 is introduced into the opening 364A while being in contact with along a side surface of the lateral guide member 330. This makes it possible to prevent a portion of the ribbon fiber 120 outside the cassette 320 from undergoing excessive curvedness

In this embodiment, the lateral guide member 330 is disposed such that a frontwardmost area of a front surface of the lateral guide member 330 is located rearward of the opening 364A of the cassette 320 when the cassette 320 is moved to a frontwardmost position, and is located frontward of the opening 364A of the cassette 320 when the cassette 320 is moved to a rearwardmost position. This makes it possible to suppress the movement of the portion of the ribbon fiber 120 outside the cassette 320 due to the movement of the cassette 320.

In this embodiment, the core wire fixing member 340 capable of fixing a part of the ribbon fiber 120 is further provided beside and rearward of the lateral guide member 330. This makes it possible to reliably guide the ribbon fiber 120 along the lateral guide member 330.

In this embodiment, the cassette 320 is formed with the jumper housing space 375 located frontward of the adapter 322 and capable of housing an end portion of the jumper cable 150, and the right sidewall 362B of the cassette 320 is formed with the cutout 365B located frontward of the adapter 322 and capable of introducing the end portion of the jumper cable 150 into the jumper housing space 375 therethrough. Thus, the jumper cable 150 can be housed in a front region of the cassette 320, so that it is possible to isolate the ribbon fiber 120 from the jumper housing space, thereby preventing interference between the ribbon fiber 120 and the jumper cable 150.

In this embodiment the cassette 320 is bilaterally symmetrical, wherein the cassette 320 has the opening 364B formed in the right sidewall 362B at a position symmetrically opposed to the opening 364A, and wherein the opening 364B is provided with the jumper cable supporting member 390 configured to guide the jumper cable 150. Thus one cassette 320 can be used to handle both cases where the ribbon fiber 120 is introduced from the right side and from the left side. Further, the introduction of the ribbon fiber 120 and the installation of the jumper cable supporting member can be performed using the openings 364A, 354B formed bilaterally symmetrically.

In this embodiment, the jumper cable supporting member 390 has the restraint portion 392D configured to restrain the jumper cable 150 in the up-down direction. Thus, the restraint portion 392D can restrain the jumper cable 150 in the up-down direction, so that it is possible to prevent the jumper cable from bending in the up-down direction, even when the cassette 320 is moved in the front-rear direction.

In this embodiment, the cassette 320 has the swingable portion 370 located on a front side thereof to define the jumper housing space 375 and configured to be swingable about a swing axis extending in the lateral direction, wherein the swingable portion 370 has the restraint portion 376 configured to restrain the jumper cable 150 in the up-down direction. Thus, the swingable portion 370 can be swung to facilitate housing the jumper cable 150 in the jumper housing space 375, and to prevent the jumper cable 150 from getting out of the jumper housing space 375, even when the cassette 320 is moved in the front-rear direction.

In this embodiment, the jumper cable fixing portion 350 capable of fixing a part of the jumper cable 150 is provided beside the second sidewalls 362B of the plurality cassettes 320. This makes it possible to, even when the cassette 320 is moved, prevent the jumper cable 150 from moving along with the movement of the cassette 320.

### <Jumper Management Section >

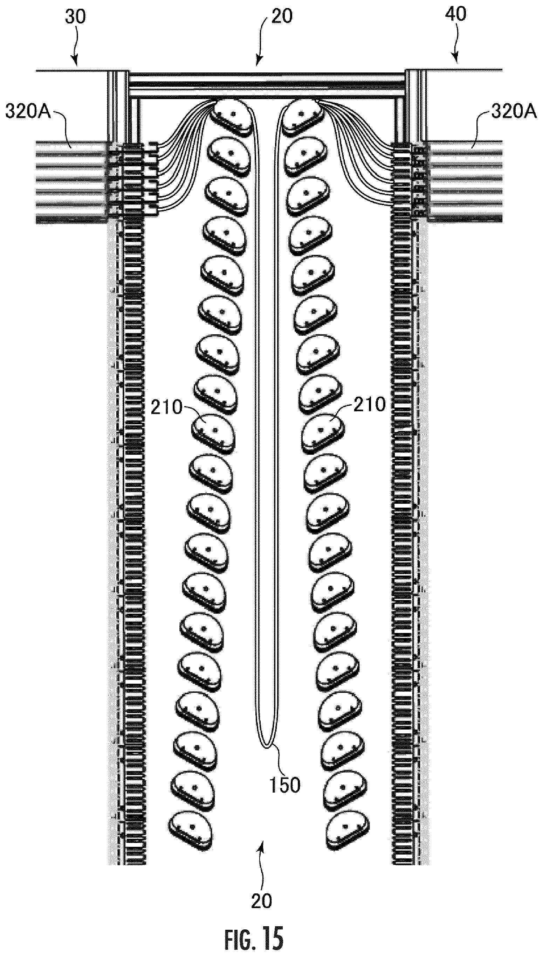

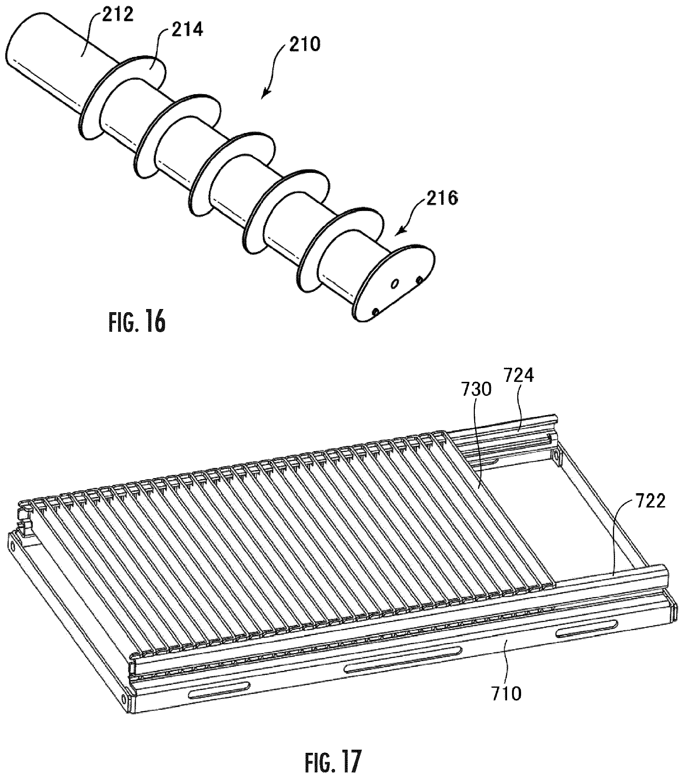

FIG. 15 is a front view enlargedly showing the jumper management section of the distribution rack illustrated in FIG. 2. FIG. 16 is a perspective view showing a cable manager constituting the jumper management section illustrated in FIG. 15.

As shown in FIG. 15, the jumper management section 20 is composed of two groups of cable managers 210, which are arranged bilaterally symmetrically. As shown in FIG. 16, each of the cable managers 210 comprised a center member 212 extending like a rod, and a plurality of partition plates 214 provided on the center member 212 at given intervals.

The center plate 212 has a base end fixed to a rear part of the frame 90, and extends frontwardly in a horizontal direction. The center member 212 is formed in an approximately semicircular shape in cross-section, and disposed at a tilt such that one lateral end thereof on the side of a lateral center of the jumper management section 20 is located lower than the other lateral end.

The plurality of partition plates 214 are provided in evenly spaced-apart relation from a front end of the center member 212. Each of the partition plates 214 has an outer shape approximately similar to the cross-sectional shape of the center member 212, and annularly surrounds the entire circumference of the center member 212. Concave areas 216 are formed between adjacent ones of the partition plates 214 and between a rearwardmost one of the partition plates 214 and the frame.

The cable managers of the left group are arranged side-by-side such that they gradually spread leftwardly toward a downward direction, and the cable managers of the right group are arranged side-by-side such that they gradually spread rightwardly toward the downward direction. That is, the right and left groups of cable managers are arranged such that the overall width thereof gradually increases toward the downward direction.

A jumper cable 150 is bridged between laterally corresponding two of the right and left groups of cable managers 210 in a sagging state, and a left end and a right end thereof are introduced, respectively, into the left termination section 30 and the right termination section 40.

Jumper cables 150 extending from two or more of the plurality of cassettes 320 are hung on each of the jumper cables 210. For example, six jumper cables 150 extending from the uppermost and second-to sixth-uppermost cassettes 320 are hung on the uppermost jumper manager 210 in FIG. 16. Further, the jumper cables 150 each corresponding to a respective one of the cassette 320 are received, respectively, in different ones of the concave areas 216, for example, such that a jumper cable 150 to be connected to the uppermost cassette 320Ais received in the frontmost concave area 216, and a jumper cable 150 to be connected to the second-uppermost cassette 320B is received in the second-frontmost concave area 216. In this way, a plurality of jumper cables 150 are bridged between the cassettes 320 of the left termination section 30 and the cassettes 320 of the right termination section 40.

### <Few-Core Cable Fixing Section >

The left few-core cable fixing section of the distribution rack illustrated in FIG. 2 will be described below.

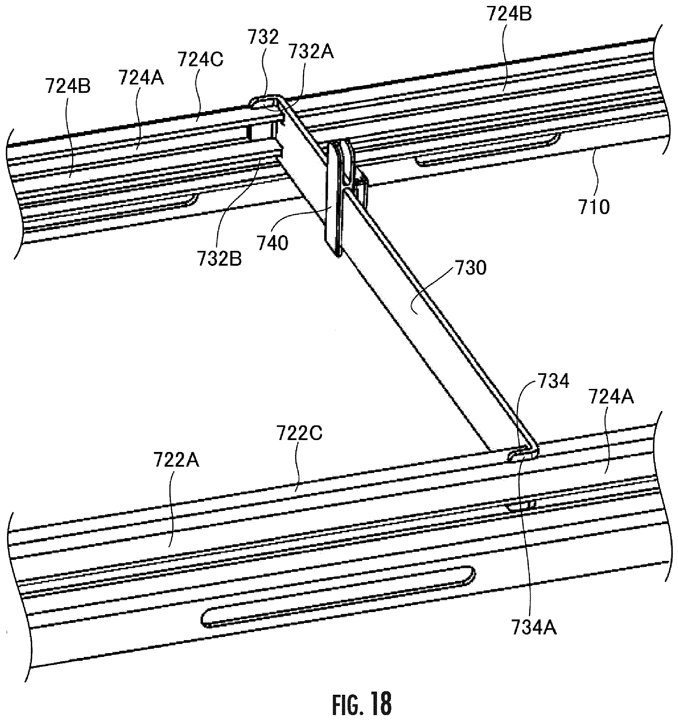

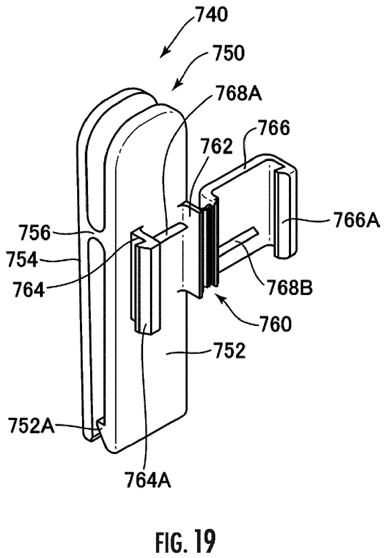

FIG. 17 is a perspective view showing a base frame of the left few-core cable fixing section of the distribution rack illustrated in FIG. 2. FIG. 18 is a perspective view enlargedly showing the left few-core cable fixing section of the distribution rack illustrated in FIG. 2, in a state in which a few-core cable is fixed thereto. It should be noted here that FIG. 19 shows only one slidable support bar 730 for the purpose of illustration. Examples of a few-core cable 160 to be fixed to the left few-core cable fixing section include: a cable having the same structure as that of a jumper cable obtained by covering a single fiber core wire with a circular external sheath, together with tensile fibers such as aramid fibers; a cable (eyeglasses type) in which a plurality of the above cables are arranged in parallel wherein central portions thereof are coupled to each other; and a cable obtained by covering one or two pieces of the round-type cables with an outer sheath, together with one or more pieces of tensile members.

As shown in FIGS. 17 and 18, the left few-core cable fixing section (cable fixing section) 70 comprises: a rectangular-shaped base frame 710; a front rail 722 and a rear rail 724 each held along a respective one of a front edge and a rear edge of the base frame 710; and a slidable support bar 730 bridged between the front rail 722 and the rear rail 724.

Each of the front rail 722 and the rear rail 724 has laterally opposite ends supported such that a gap is formed with respect to the base frame in a height direction thereof. Each of the front rail 722 and the rear rail 724 is formed by bending a plate into a cross-sectionally angular-C shape which has: a vertical wall 722A, 724A extending vertically; a lower wall 724B extending inwardly in the front-rear direction from a lower edge of the vertical wall 722A, 724A; an upper wall 722C, 724C extending inwardly in the front-rear direction from an upper edge of the vertical wall 722A, 724A.

The slidable support bar 730 is formed by bending opposite ends 732, 734 of a plate perpendicularly in one direction. Each of the opposite ends of the slidable support bar 730 is formed with a pair of slits 732A, 732B; 734A, and the edges of the upper walls 722C, 724C and the lower walls 722B, 724B of the front rail 722 and the rear rail 724 are inserted, respectively, in the slits 734A, 732A, 732B. In this way, the slidable support bar 730 is held laterally slidably along the front rail 722 and the rear rail 724, in a state in which the surface thereof extend in the up-down direction and in the front-rear direction. In this embodiment, the left few-core cable fixing section is configured such that each of the front rail 722 and the rear rail 724 extends in the right-left (lateral) direction, and the slidable support bar 730 extends in the front-rear direction. Alternatively, the left few-core cable fixing section may be configured such that a pair of rails are arranged to extend in the front-rear direction, and the slidable support bar is bridged between the pair of rails in the right-left direction, such that it is movable along the pair of rails in the front-rear direction. That is, after arranging a pair of rails in parallel, the slidable support bar may be disposed in a direction intersecting the rails.

The left few-core cable fixing section 70 also comprises a clip member 740.

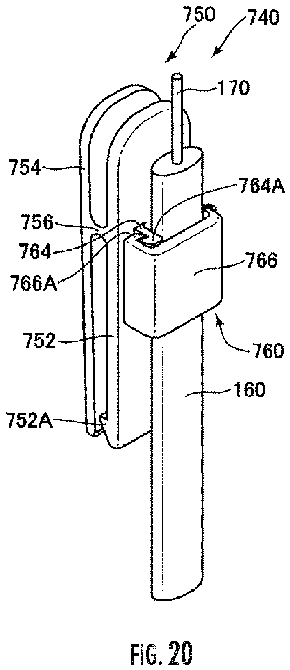

FIGS. 19 and 20 are perspective views showing the clip member to be used in the left few-core cable fixing section, wherein FIG. 19 shows a state in which a cover thereof is opened, and FIG. 20 shows a state in which the cover is closed to fix an optical fiber cable thereto. As shown in FIGS. 10 and 20, the clip member 740 is formed of an elastic resin or the like, and comprises a clip-like attaching portion 750 and a cable retaining portion 760.

The attaching portion 750 has an H shape in cross-section, and comprises an obverse wall part 752, a reverse wall part 754, and a pivotal connection part 756. Each of the obverse wall part 752 and the reverse wall part 754 has an up-down directionally elongate shape. The obverse wall part 752 and the reverse wall part 754 are connected together by the pivotal connection part 756 extending between opposed surfaces of the wall parts at a position upward of an up-down directionally midpoint thereof. A pawl 752A is formed on an inner surface of a lower end of the obverse wall part 752 to extend laterally. It is to be understood that the pawl may be provided on the reverse wall part 752, or may be provided on each of the obverse wall part 752 and the reverse wall part 754. In the above configuration, by pinching upper ends of the obverse wall part 752 and the reverse wall part 754 such that they come closer to each other, the obverse wall part 752 and the reverse wall part 754 can be swung about the pivotal connection part 756 so as to expand a gap between lower ends of the obverse wall part 752 and the reverse wall part 754. Then, by releasing the pinching, a deformed shape returns to the original state, so that the gap between lower ends of the obverse wall part 752 and the reverse wall part 754 is closed. In this embodiment, the attaching portion has a clip-like configuration. The term "clip-like configuration" means a configuration in which a pair of members (the obverse wall part 752 and the reverse wall part 754) are provided swingably about a connection part (the pivotal connection part 756), wherein the slidable support bar 730 can be clamped by the pair of members.

As shown in FIG. 19, the attaching portion 750 can be attached to the slidable support bar 730 by: pinching the upper ends of the obverse wall part 752 and the reverse wall part 754 to open the lower ends of the obverse wall part 752 and the reverse wall part 754; disposing the attaching portion 750 such that the slidable support bar 730 is located between the obverse wall part 752 and the reverse wall part 754; and closing the lower ends of the obverse wall part 752 and the reverse wall part 754. In this state, upper and lower edges of the slidable support bar 730 are clamped by the pivotal connection part 756 and the pawl 752A, and opposite lateral surfaces of the slidable support bar 730 are clamped by the obverse wall part 752 and the reverse wall part 754, whereby the attaching portion 750 is attached to the slidable support bar 730.

The cable holding portion 760 comprises a pair of first and second sidewall parts 762, 764 each extending in the up-down direction, and a cover part 766 swingably connected to the first sidewall part 762. Each of the first and second sidewall parts 762, 764 is provided on an outer surface of the obverse wall part to stand in a direction perpendicular to the outer surface, and extend in the up-down direction. One of opposed side edges of the cover part 766 is connected along a distal edge of the first sidewall part 762, so as to allow the cover part 766 to be swung about this connection area extending in the up-down direction. A pawl 766A is formed on the other edge of the cover part 766 to extend in the up-down direction. Further, a pawl 764A is formed on a distal edge of an outer surface of the second sidewall part 764. Further, a cross-sectionally triangular-shaped protrusion 768a is formed on the outer surface of the obverse wall part 752 to extend between the first and second sidewall parts 762, 764 in the lateral direction, and a cross-sectionally triangular-shaped protrusion 768B is formed in a lower region of an inner surface of the cover part 766 to extend in the lateral direction.

The cable retaining portion 760 can hold a few-core cable 160 by disposing a part of the few-core cable 160 between the first and second sidewall parts 762, 764 and closing the cover part 766. When the cover part 766 is closed, the pawl 766A of the cover part 766 is engaged with the pawl 764A of the second sidewall part 764, so that the cover part 766 is fixed. Further, the protrusion 768B on the outer surface of the obverse wall part 752 and the protrusion 768B of the cover part 766 come into contact with the sheath of the few-core cable 160, so that the few-core cable 160 is fixed to the cable retaining portion 760.

In an operation of fixing the few-core cable 160, first of all, slidable support bars 730 on both sides of a target slidable support bar 730 to which the few-core cable 160 is to be fixed are moved to provide a space around the target slidable support bar 730. In this state, the few-core cable 160 is led to pass through the base frame 710 from therebelow. Then, a part of the few-core cable 160 is disposed between the first and second sidewall parts 762, 764 of the clip member 740, and the cover part 766 is closed to fix the few-core cable 160 to the clip member 740. Then, the upper ends of the obverse wall part 752 and the reverse wall part 754 of the attaching portion 750 are pinched to open the lower ends of the obverse wall part 752 and the reverse wall part 754, so as to clamp the slidable support bar 730 between the obverse wall part 752 and the reverse wall part 754. In this way, the clip member 740 is attached to the slidable support bar 730. Then, the slidable support bar 730 with the clip member 740 attached thereto is appropriately moved along the front rail 722 and the rear rail 724.

The sheath of the few-core cable 160 is removed at a position above a position where it is retained by the clip member 740, and single-core fibers 170 are exposed. Then, each of the single-core fibers 170 is led to extend upwardly, and introduced into the left termination section 30. The single-core fiber 170 is connected to the front side of the adapter 322 in a similar manner to that for the jumper cable 150. In this embodiment, the single-core fibers 170 are introduced into the left termination section 30. Alternatively, they may be introduced into the right termination section 40.

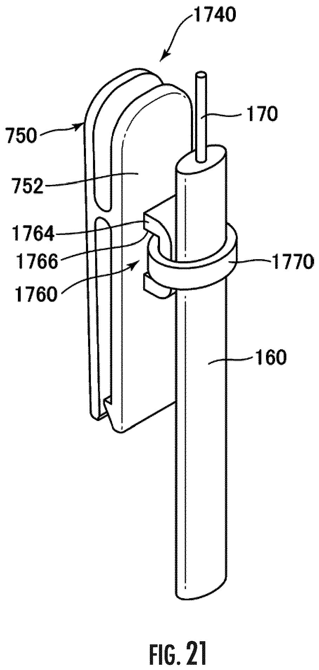

It should be noted here that the clip member 740 is not limited to the configuration illustrated in FIGS. 19 and 20. FIG. 21 is a perspective view showing a clip member having another configuration. As shown in FIG. 21, a clip member 1740 comprises an attaching portion 750 and a cable retaining portion 1760. The configuration of the attaching portion 750 is similar to the configuration of the attaching portion 750 in the clip member 740 illustrated in FIGS. 19 and 20. The cable retaining portion 1760 has a protrusion 1764 formed on an outer surface of an obverse wall part 1752 of the attaching portion 750, and a binding band member 1770. The protrusion 1764 is formed with an opening 1766 penetrating through the protrusion 1764 in the lateral direction. The binding band member 1770 is wound around the few-core cable 160 while penetrating through the opening 1766 of the protrusion 1764. The few-core cable 160 can also be retained by such a configuration.

### <Few-Core Cable Management Section >

The few-core cable management section of the distribution rack illustrated in FIG. 2 will be described below.

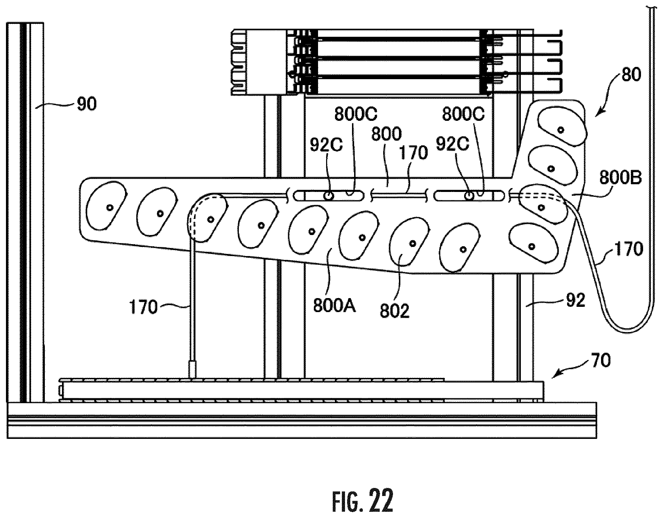

FIG. 22 is a front view showing the few-core cable management section of the distribution rack illustrated in FIG. 2. As shown in FIG. 22, the few-core cable management section 80 comprises a base plate 800 attached to the rear frame 92, and a cable manager 802 attached to the base plate 800.

The base plate 800 has a laterally-extending part 800A, and an obliquely-extending part 800B extending obliquely upwardly from an inner end of lateral laterally-extending part 800A. The base plate 800 is formed with a pair of laterally elongate holes 800C. A pair of support members 92C each standingly extending frontwardly from the rear frame 92 are inserted, respectively, into the laterally elongate holes 800C, so as to allow the base plate 800 to be supported to the rear frame 92 such that it is movable in the lateral direction.

A plurality of the cable managers 802 are standingly provided on the laterally-extending part 800A such that they are arranged side-by-side in the lateral direction. The cable managers 802 standingly provided on the laterally-extending part 800A are arranged such that they are gradually located at a lower position toward the inward side.

A plurality of the cable managers 802 are standingly provided on the obliquely-extending part 800B such that they are arranged side-by-side in the up-down direction. The cable managers 802 standingly provided on the obliquely-extending part 800B are arranged such that they are gradually located at a more inward position toward the upward side.

The configuration of the cable manager 802 is substantially the same as that of the cable manager 210 in the jumper management section 20, wherein a plurality of partition plates are attached onto a center member at even intervals.

The few-core cable management section 80 is configured to guide a single-core fiber 170 extending from the left few-core cable fixing section 70. FIG. 22 shows a case where the single-core fiber 170 is introduced into the left termination section 30. In this case, the single-core fiber 170 extending from the left few-core cable fixing section 70 is guided to one of the cable managers 802 of the laterally-extending part 800A to extend toward a laterally central region, and hung on one of the cable managers 802 of the obliquely-extending part 800B to form a sagging once. Then, the single-core fiber 170 is introduced into the jumper management section 20. The single-core fiber 170 introduced into the jumper management section 20 is guided by one of the cable managers 210 of the jumper management section 20 toward one of the cassettes 320 of the left termination section 30, and connected to one of the adapters from the front side of the adapter. Based on the above sagging, the single-core fiber 170 receives a force pulling toward the jumper management section 20, so that it is possible to prevent the single-core fiber 170 from sagging between the clip member and the cable manager of the laterally-extending part 800A.

Further, for example, in a case where another few-core cable management section 80 is provided in a right region of the distribution rack, the left few-core cable management section 80 can lead a single-core fiber 170 to the right region of the distribution rack. In this case, the single-core fiber 170 extending from the left few-core cable fixing section 70 is guided toward the obliquely-extending part 800B by one of the cable managers 802 of the laterally-extending part 800A, and further led toward the right region of the distribution rack by one of the cable managers 802 of the obliquely-extending part 800B. Then, the single-core fiber 170 can be guided upwardly by the right few-core cable fixing section, and led to one of the cassettes of the right termination section 40.

In this embodiment, a few-core cable 160 can be fixed to the left few-core cable fixing section 70 by attaching the attaching portion 750 to the support bar 730 in the state in which the few-core cable 160 is retained by the cable retaining portion 760. In this way, the clip member 740 can be preliminarily attached to the few-core cable 160, and then attached to the support bar 730, so that an operation of fixing the few-core cable 160 needs not be conducted in a limited space and can be conducted without taking time and effort. Further, the clip member 740 with the few-core cable 160 attached thereto can be attached to the support bar 730, so that it is possible to densely fix the few-core cables 160. Further, in an operation of detaching the few-core cable 160, after detaching the clip member 740 from the support bar 730, the clip member 740 may be detached from the few-core cable 160, so that it is possible to facilitate the detaching operation.

In this embodiment, the left few-core cable fixing section 70 comprises the front rail 722 and the rear rail 724 each extending in the right-left direction, wherein the support bar 730 is movable along the front rail 722 and the rear rail 724 in the right-left direction. According to this feature, the few-core cables 160 can be densely arranged by moving the support bar 730 with the few-core cable 160 attached thereto by the clip member 740.

In this embodiment, the attaching portion 750 has a clip-like configuration, so that the clip member 740 can be attached to the support bar 730 by clipping the attaching portion 750 to the support bar 730.

In this embodiment, the cable retaining portion 760 comprises the cover part 766 which is swingable about a pivot axis extending longitudinally and formed along one of laterally-opposed edges thereof, wherein the other edge of the cover is configured to be fixable, whereby the few-core cable 160 can be retained by the cable retaining portion 760 in a state in which the few-core cable 160 is covered with the cover part 766, and the other end of the cover is fixed. According to this feature, the few-core cable 160 can be attached to the clip member 740 by a simple operation of swinging the cover part 766.

In the modified embodiment illustrated in FIG. 21, the cable retaining portion 1760 is configured to retain the binding band member 1770 wound around the clip member 1740. According to this feature, the few-core cable 160 can be easily attached to the clip member 1740 by winding the binding band member 1770 around the few-core cable 160, and allowing the binding band member 1770 to be retained by the clip retaining portion 1760.

In this embodiment, the left few-core cable fixing section 70 is provided just below the left cable fixing section 50. Thus, the few-core cable 160 extending from a lower side can be introduced into the left termination section 30 in a state in which it is held by the left few-core cable fixing section 70.

In this embodiment, the distribution rack comprises the few-core cable management section 80 provided just above the left few-core cable fixing section 70 and configured to retain the few-core cable 160. According to this feature, an upper part of the few-core cable 160 is held by the few-core cable management section 80, so that it is possible to facilitate an operation of attaching the few-core cable 160 to the left few-core cable fixing section 70.

### LIST OF REFERENCE SIGNS

1: cabling system
2: data center
10, 10A, 10B, 10C, 10D: distribution rack
20: jumper management section
30: left termination section
40: right termination section
50: left cable fixing section
60: right cable fixing section
70: left few-core cable fixing section
80: few-core cable management section
90: frame
91: front frame
92: rear frame
92A, 92B: pillar member
92C: support member
93: cross member
100, 100A, 100B: optical fiber cable
110: bundle of optical fiber cables
115: sheath
120: ribbon fiber
122: ribbon fiber
130: branching portion
132: fusion sleeve
140: single-core fiber
140A: connector
150: jumper cable
160: few-core cable
170: single-core fiber
210: cable manager
212: center member
214: partition plate
216: concave area
310: rail frame
310A, 310B: rail
320, 320A, 320B: cassette
322: adapter
324: core-wire guide member
326: jumper support member
330: lateral guide member
332: flat surface part
334: curved surface part
340: core wire fixing portion
342: slit
350: jumper cable fixing portion
352: slit
360: cassette body
361: bottom plate part
361A: left front-side guide protrusion
361B: left intermediate guide protrusion
361C: left rear-side guide protrusion
361D: right front-side guide protrusion
361E: right intermediate guide protrusion
361F: right rear-side guide protrusion
361G: holding protrusion
361H: branching portion retaining part
362A, 362B: sidewall part
363: rear wall part
363A, 363B: slide part
364A: opening
365A, 365B: cutout
366: core wire housing space
370: swingable portion
371: bottom plate part
372: sidewall part
373: front face-forming part
374: fold-back part
375: jumper housing space
376: restraint portion
380: core wire guide member
382: base end part
382A: slit
382B: top end
382C: guide wall
384: widened part
384A: guide wall
384B: arm
390: jumper support member
392: member body
392A: base plate part
392B: standing part
392C: fold-back part
392D: restraint portion
394: attaching part
502, 502A, 502B, 502C, 502D, 502E, 502F, 502G, 502H: guide member
504: base part
504A: rear end area
504B: front end area
504C: intermediate area
508: attaching part
510, 510A, 510B, 510C, 510D, 510Z: arm part
512, 512A, 512B, 512C, 512Z: receiving space
520: binding band
710: base frame
722: front rail
722A: vertical wall
722C: upper wall
724: rear rail
724A: vertical wall
724B: lower wall
724C: upper wall
730: slidable support bar
732, 734: end
732A, 734A, 72B3, 734B: slit
740: clip member
750: attaching portion
752: obverse wall part
752A: pawl
754: reverse wall part
756: pivotal connection part
760: cable retaining portion
762, 764: sidewall part
764A, 766A: pawl
766: cover part
768A, 768B: protrusion
800: base plate
800A: laterally-extending part
800B: obliquely-extending part
800C: laterally elongate hole
802: cable manager
1740: clip member
1752: obverse wall part
1760: cable retaining portion
1764: protrusion
1766: opening
1770: binding band member

## Claims

1. A distribution rack, comprising a connection section (30) connecting an end of a first optical fiber (120) and an end of a second optical fiber (150) together,
wherein the connection section (30) has a plurality of cassettes (320) each internally formed with a housing space (366) capable of housing an end portion of the first optical fiber (120) and movable in a given range in a front-rear direction,
wherein each of the cassettes (320) has a pair of laterally opposed sidewalls (362A, 362B), one sidewall (362A) of which is formed with a first introduction port (364A) capable of introducing the first optical fiber (120) into the housing space (366) therethrough,
each of the cassettes (320) comprising an adapter (322) configured to allow the end of the first optical fiber (120) introduced through the first introduction port (364A) to be connected thereto, and allow the end of the second optical fiber (150) to be connected thereto; and
wherein a guide portion (380) is formed at the first introduction port (364A), the guide portion (380) having a pair of front and rear guide walls (384A) forming therebetween a guide space expanding in the front-rear direction toward a lateral direction, wherein each of the front and rear guide walls (384A) is formed in a curved shape which is convex toward the guide space in plan view.

2. The distribution rack according to claim 1, wherein the guide portion (380) has an arm (384B) extending above the guide space.

3. The distribution rack according to claim 1 or 2, comprising a lateral guide member (330) provided beside the one sidewalls (362A) of the plurality of cassettes (320), and formed in a frontwardly curved shape in plan view, wherein the first optical fiber (120) is introduced into the first introduction port (364A) while being guided along a side surface of the lateral guide member (330).

4. The distribution rack according to claim 3, wherein the lateral guide member (330) is disposed such that a frontwardmost area of the lateral guide member (330) is located rearward of the first introduction port (364A) of the cassette (320) when the cassette (320) is moved to a frontwardmost position, and is located frontward of the first introduction port (364A) of the cassette (320) when the cassette (320) is moved to a rearwardmost position.

5. The distribution rack according to claim 3 or 4, further comprising a first optical fiber-fixing member (340) provided beside and rearward of the lateral guide member (330) and capable of fixing a part of the first optical fiber (120).

6. The distribution rack according to any one of claims 1 to 5, wherein
the cassette (320) is formed with a second housing space (375) located frontward of the adapter (322) and capable of housing an end portion of the second optical fiber (150), and
the other sidewall (362B) of the cassette (320) is formed with a second first introduction port (365B) located frontward of the adapter (322) and capable of introducing the end portion of the second optical fiber (150) into the second housing space (375) therethrough.

7. The distribution rack according to any one of claims 1 to 6, wherein the cassette (320) is symmetrical, wherein the cassette (320) has a second introduction port (364B) formed at a position symmetrically opposed to the first introduction port (354A), the second introduction port (364B) being provided with a second supporting member (390) configured to guide the second optical fiber (150).

8. The distribution rack according to claim 7, wherein the second supporting member (390) has a restraint portion (392D) configured to restrain the second optical fiber (150) in a vertical direction.

9. The distribution rack according to claim 6, wherein the cassette (320) has a swingable portion (370) located on a front side thereof to define the second housing space (357) and configured to be swingable about a swing axis extending in the lateral direction, the swingable portion (370) having a restraint portion (376) configured to restrain the second optical fiber (150) in a vertical direction.

10. The distribution rack according to any one of claims 1 to 9, comprising a second fixing portion (350) provided beside the second sidewalls (362B) of the plurality cassettes (320) and capable of fixing a part of the second optical fiber (150).
